(19)

Europäisches
Patentamt
European
Patent Office
Office européen
des brevets

(11) **EP 2 618 311 A1**

(12) **EUROPEAN PATENT APPLICATION**

(43) Date of publication:
**24.07.2013 Bulletin 2013/30**

(51) Int Cl.:
***G06T 13/20*** (2011.01)

(21) Application number: **12151419.4**

(22) Date of filing: **17.01.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **NTT DoCoMo, Inc.
Tokyo (JP)**

(72) Inventors:
• **Knothe, Reinhard
4058 Basel (CH)**

• **Vetter, Thomas
4057 Basel (CH)**
• **Ajaj, Rami
80798 Munich (DE)**
• **Fahrmair, Michael
81375 Munich (DE)**

(74) Representative: **Betten & Resch
Theatinerstrasse 8
80333 München (DE)**

(54) **A computer-implemented method and apparatus for performing a head animation**

(57)   A computer-implemented method for performing a head animation to generate an animated head movement, said method comprising:
Tracking the pose (or position) of the head through a sample video;
Training a face animation model which represents said head using prosodic sound features as input and the tracked pose as an output;
Based on said trained face animation model, using as an input the prosodic sound features and
generating as an output a head animation a head animation to generate an animated head movement.

Fig. 3

EP 2 618 311 A1

**Description**

**FIELD OF INVENTION**

The present invention relates to a computer-implemented method for animating a head movement and a corresponding apparatus.

This invention is related to the field of human-like virtual avatars. More specifically, it increases the realism and the naturalness of the head movements of a speaking avatar. Such human-like avatars could be online virtual assistants, virtual teachers, personal avatars (e.g. that replace persons in video chats) and many more.

**BACKGROUND OF THE INVENTION**

The field of the invention is related to the field of human-like virtual avatars. More specifically, it is directed to the field of increasing the realism and the naturalness of the head movements of a speaking avatar. Such human-like avatars could be online virtual assistants, virtual teachers, personal avatars (e.g. that replace persons in video chats) and many more.

Virtual avatars are widely used in many applications such as online assistants or as e-teachers. They express their selves through speech and body movement to relate the information in a realistic way. The expressivity and the naturalness of animations make these avatars appreciated by users. Therefore users will appreciate using a service when it offers a natural and a good quality avatar.

In order to provide a natural head movement, the head pose must be synchronized with the speech (i.e the audio) and must be animated in a natural way.

There are two main issues that need to be considered:

- The head and the head rotation must be modelled in 3D, otherwise the applicable angle for the head rotation is limited
- The head movement must be learned from data, otherwise the head movement looks hand-crafted and unnatural.

Existing systems that generate animated speaking avatars from input photos according to sound do not move the head at all (see e.g. Volker Blanz, Curzio Basso, Tomaso Poggio and Thomas Vetter, "Reanimating Faces in Images and Video", 2003, or Brand: Voice pupperty. SIGGRAPH 99, or Ezzat, Geiger and Poggio: Trainable video realistic speech animation. ACM Trans. Graph., 388-398, 2002), or they limit the head rotation to small angles (e.g. motion-portrait). The reason for this is that small head rotations can be simulated by warping the 2D image, avoiding the need to reconstruct the full 3D shape from the input image.

It is therefore desirable to have an approach which is capable of providing a more realistic head movement animation.

**SUMMARY OF THE INVENTION**

According to one embodiment there is provided a computer-implemented method for performing a head animation to generate an animated head movement, said method comprising:

Tracking the pose (or position) of the head through a sample video;
Training a face animation model which represents said head using prosodic sound features as input and the tracked pose as an output;
Based on said trained face animation model, using as an input the prosodic sound features and generating as an output a head animation a head animation to generate an animated head movement.

Tracking the pose and learning the head movement in combination with prosodic sound features achieves a more realistic animation than before.

According to one embodiment said pose of the head comprises angles for yaw and pitch.

According to one embodiment said face animation model is a double-layer model, wherein the first layer is a Conditional Random Filed (CRF) that uses the prosodic sound features as input and with the states of the head as output, and wherein the second layer is higher-order Gaussian Mixture Markov Model that generates the pose track angles (pitch and yaw) given the states and the history.

According to one embodiment the states of the head as output of the CRF comprise the states head-up, head-down, and head still.

According to one embodiment the pose tracking is performed by the tracking of landmarks based on which the pose is determined, and wherein

A Bayesian approach is used for the pose tracking wherein the detected landmarks given the pose parameters can be represented by a measurement model using the assumption of Gaussian noise $N(0,\sigma_N)$ on the detected landmarks

$$\mathcal{L}_f = (\ell_{f,1}, \ldots \ell_{f,L})$$

According to one embodiment the probability of the landmarks is given by

$$p(\mathcal{L} \mid \rho) = \prod_f p(\mathcal{L}_f | \rho_f)$$
$$= \prod_f \exp(-\frac{1}{2\sigma_N} \sum_i \| P_\rho \vec{x}_{i,f} - \vec{\ell}_{i,f} \|^2)$$

According to one embodiment for the Bayesian approach for the a-priori probability of the camera parameters there is used a motion model to assure that the head is not moving or changing its direction too rapidly.
According to one embodiment the a-priori probability is expressed by a probabilistic representation of the first and/or the second derivative of the pose, preferably by:

$$p(\rho) = \prod_f \exp(-\frac{1}{2}\eta_1 \| \nabla M_{\rho_f} x \|^2) + \exp(-\frac{1}{2}\eta_2 \| \nabla^2 M_{\rho_f} x \|^2)$$

According to one embodiment to maximize the probability for the obtained pose parameters there is minimized the negative log of the probability yielding the cost function Cost Function expressed as

$$E(\rho) = -\log p(\mathcal{L} \mid \rho) \cdot p(\rho) = -\log p(\mathcal{L}|\rho) - \log p(\rho)$$

According to one embodiment said CRF is trained using as an input the states obtained from a sample video and the corresponding sound features;
Wherein the states for training said CRF are obtained from the tracked pose of the head which has been obtained by tracking features or landmarks for said sample video, and wherein as further input data for training the CRF, the prosodic sound feature for pitch and/or intensity of the sample video are used.
According to one embodiment the state output from the CRF is used as an input to a Markov Model.
According to one embodiment to model the probability in the Markov Model, there is used a Gaussian Mixture Model where for each state, a joint probability distribution

$$p(\varphi_t, \ldots, \varphi_{t-T}, \psi_t, \ldots, \psi_{t-T}) \sim \mathcal{N}(\mu_s, \Sigma_s)$$

for the pitch ($\varphi$) and yaw ($\psi$) angles for the current time t and a history of length T is learned from the sample video data track, where $\mu_s$ is the mean and $\Sigma_s$ is the covariance matrix.
According to one embodiment the CRF is used to determine the states, and then determine the pitch $\varphi t$ and yaw $\psi t$ at time t, there is sampled from the conditional distribution

$$p(\varphi_t, \psi_t \mid \varphi_{t-1}, \ldots, \varphi_{t-T}, \psi_{t-1}, \ldots, \psi_{t-T})$$

According to one embodiment there is provided an apparatus for performing a head animation to generate an animated head movement, said apparatus comprising:

A module for tracking the pose (or position) of the head through a sample video;
A module for training a face animation model which represents said head using prosodic sound features as input and the tracked pose as an output;
A module for, based on said trained face animation model, using as an input the prosodic sound features and generating as an output a head animation a head animation to generate an animated head movement.

According to one embodiment there is provided an apparatus further comprising one or more modules for performing a method according to one the embodiments

According to one embodiment there is provided computer program comprising computer program code which when being executed on a computer enables said computer to carry out a method according to one the embodiments.

## DESCRIPTION OF THE DRAWINGS

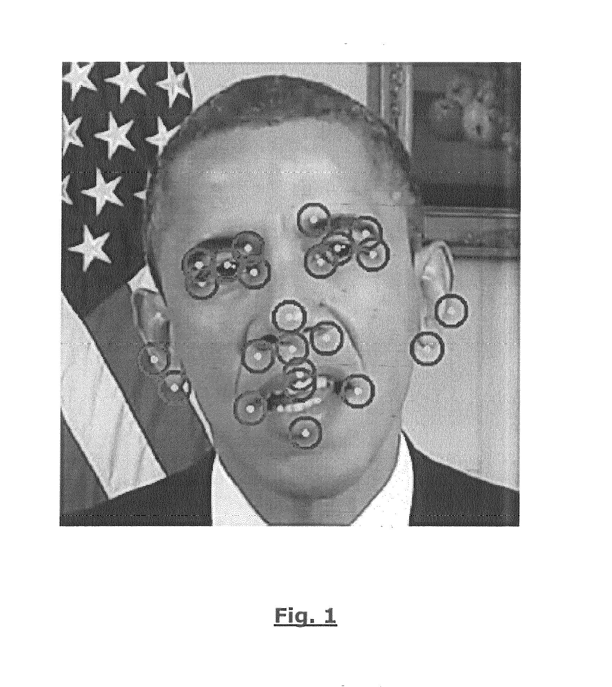

Figs. 1 to 3 schematically illustrate embodiments of the invention.

## DETAILED DESCRIPTION

According to one embodiment the Face Animation Model (FAM) is based on on a 3D reconstruction of the facial shape from a single input photo which may e.g. based on V. Blanz and T. Vetter, "A Morphable Model for the Synthesis of 3D Faces " SIGGRAPH 99, 187-194-; R. Knothe "A global-to-local model for the representation of human faces", PhD Thesis, 2009;] P. Paysan, R. Knothe, B. Amberg, S. Romdhani, T. Vetter "A 3D Face Model for Pose and Illumination Invariant Face Recognition", AVSS '09; US Patent Application 61/223.607 "Modeling Methods and System", 07/07/2009; Brian Amberg and Thomas Vetter, "Optimal Landmark Detection using Shape Models and Branch and Bound", ICCV 2011; Volker Blanz, Curzio Basso, Tomaso Poggio and Thomas Vetter, "Reanimating Faces in Images and Video", 2003.

This reconstruction is significant for the animation, since it allows rotating the face freely in full 3D without limitations. To model the animation and the correlation between the input speech and the head movement, according to one embodiment there is used a learning-from-video approach that overcomes the limitation of hand-crafted models and result in a much more realistic and natural animation.

According to one embodiment, to train the model from video, there is use a marker-less tracking method, that allows the usage of existing video footage.

An advantage of this method is that it allows to generate natural 3D head movements according to speech based on a learning algorithm from example video footage.

According to one embodiment, by using a stochastic sampling algorithm, the system can generate different natural head movements for the same input. This is an advantage, since when a sentence is repeated, a second plausible head movement is generated.

The solution proposed by the present approach is generic, however, in the embodiments described here it is applied on a specific 3D face model called the Morphable Model (MM) described in V. Blanz and T. Vetter, "A Morphable Model for the Synthesis of 3D Faces" SIGGRAPH 99, 187-194.

In the following embodiments of the invention will be described in somewhat more detail.

In a first step, a head movement is "learned" from a sample video. For that purpose the head position or head pose is identified in each frame. In one embodiment this can be done manually, however, according to one embodiment a markerless tracking of the head pose which can be performed automatically is used. This can be done by using a feature detecting algorithm which detects feature points. The feature point detector may be trained with manually or semi-automatically detected landmarks.

For example in one embodiment a system called GraphTrack (see e.g. Brian Amberg and Thomas Vetter, "GraphTrack: Faster than realtime tracking in videos", CVPR'11) is used to semi-automatically track the position of 23 landmarks in the first 200 frames of the video. To label the remaining video, in one embodiment feature point detectors (for a description see e.g. Brian Amberg and Thomas Vetted, "Optimal Landmark Detection using Shape Models and Branch and Bound", ICCV 2011) are trained with the tracked position of the 23 landmarks. This allow a robust detection of the landmarks in the full video. Based on the feature points, the pose (or position) of the head is tracked through the video.

In a second step, the Face Animation Model (FAM) is trained using prosodic sound features as input and the tracked angles for yaw and pitch as output. The FAM is a double- layer model: the first layer is a Conditional Random Filed (CRF) that uses the prosodic sound features as input and with three states as output (head up, head down, head still). The second layer is higher-order Gaussian Mixture Markov Model (hereinafter referred to as GMMM) that generates the pose track angles (pitch and yaw) given the states and the history.

In the following there will be described in somewhat more detail how the generation of the training tracks for the head pose is performed. To generate the training tracks we use existing 2D video footage without markers attached to the face. This is important for two reasons: First we can generate training tracks of arbitrary length for almost no cost, and secondly we can use exsisting video data (e.g. videos of celebrities) to learn personalized models.

In one embodiment, to generate tracks of high quality there is used a bootstrapping approach where there is allowed manual interaction in the first part of the video footage (e.g. typically in the first 200 frames).

The fitting of the head pose track to the video is based on L = 23 landmarks Lf (see Figure 1 which shows the 23 landmarks which are detected in each frame of the video footage) that are detected in each frame f of the video footage using the feature detection mechanism described in Brian Amberg and Thomas Vetter, "Optimal Landmark Detection using Shape Models and Branch and Bound", ICCV 2011. To improve the quality, the feature detectors are trained individually for each subject, where a semi-automatic tracking tool (for a description thereof see "Brian Amberg and Thomas Vetter, "GraphTrack: Faster than realtime tracking in videos", CVPR'11") is used on the first 200 frames.

In each frame pf = ($\psi$, ($\varphi$, $\gamma$, t) denote the camera parameters, where $\psi$, $\varphi$ and $\gamma$ are the angles for pitch, yaw and roll, resp. and t is the 3D translation. The corresponding projection matrix Ppf = $\pi$M($\psi$,$\varphi$,$\gamma$,t) is the product of the modelview matrix and the perspective matrix.

Then there is used a Bayesian approach, according to which the probability of the camera parameters p (or the "pose parameters") given the landmarks L given by

$$p(\rho \mid \mathcal{L}) \sim p(\mathcal{L}|\rho) \cdot p(\rho)$$

is proportional to the product of the probability of the landmarks given the parameters and an a-priori assumption on the smoothness of the pose track.

The probability of the detected landmarks given the parameters can be represented by a measurement model using the assumption of Gaussian noise $N(0, \sigma_N)$ on the detected landmarks

$$\mathcal{L}_f = (\ell_{f,1}, \dots \ell_{f,L})$$

The probability of the landmarks is given by

$$p(\mathcal{L} \mid \rho) = \prod_f p(\mathcal{L}_f|\rho_f) \qquad (2.1)$$

$$= \prod_f \exp(-\frac{1}{2\sigma_N} \sum_i \| P_\rho \vec{x}_{i,f} - \vec{\ell}_{i,f}\|^2) \qquad (2.2)$$

For the a-priori probability of the camera parameters there is used a motion model to assure that the head is not moving (or changing its direction) too rapidly. This can be expressed by the following:

$$p(\rho) = \prod_f \exp\left(-\frac{1}{2}\eta_1 \|\nabla M_{\rho_f} x\|^2\right) + \exp\left(-\frac{1}{2}\eta_2 \|\nabla^2 M_{\rho_f} x\|^2\right) \qquad (2.3)$$

This a-priori probability is based on the assumptions about the smoothness of the motions, it uses first derivative (=speed) and second derivative (=acceleration) in a probabilistic distribution.

To maximize the probability there is minimized the negative log of the probability yielding the cost function Cost Function:

$$E(\rho) = -\log p(\mathcal{L} \mid \rho) \cdot p(\rho) = -\log p(\mathcal{L}|\rho) - \log p(\rho)$$

The minimization can e.g. be performed using a known method such as gradient decent method (L-BFGS-B).

With this Bayesian approach there is then obtained a good quality estimate of the pose (the pose parameters) over time for the sample video track which is to be used for the learning of the face animation model.

In the following the animation learning according to one embodiment will be described in somewhat more detail.

In the following there is described an embodiment using an algorithm to learn natural head movements from input video footage. The input video footage (the video track used for learning) can be analysed as described above to obtain the pose parameters of the video frames. These parameters together with prosodic features such as pitch and intensity (which may be obtained for the sample video using some standard analysing procedure which is known) may then be used for learning the head movement by the model.

The animation system for the head movement uses a Gaussian Mixture Markov Model (GMMM) that is trained given the tracks for the head movement (from the sample video or videos) and the prosodic input features extracted from the audio.

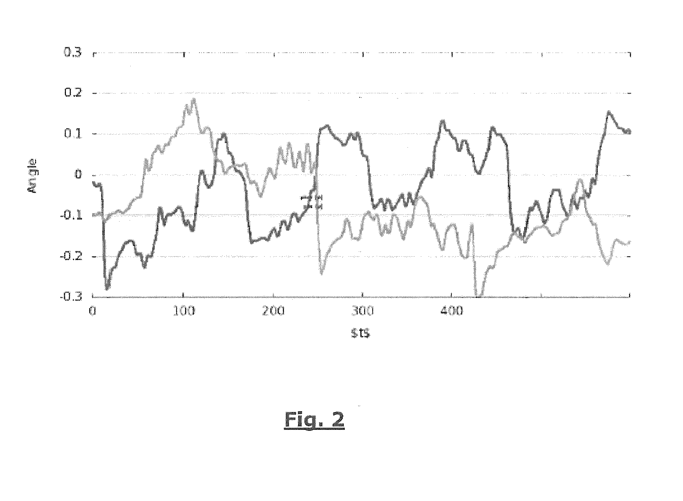

A typical head movement for the angles pitch and yaw is shown in Figure 2. As one can see, regions with fast head movements up and down alternate with regions with regions where the head stays more or less still. To model this behaviour there is used a GMMM with three states: UP, DOWN, STILL. In contrast to Hidden Markov Models (HMM), the states are determined using a Conditional Random Field (CRF) (see e.g. J. Lafferty and A. McCallum and F. Pereira "Conditional random fields: Probabilistic models for segmenting and labelling sequence data", Proc. Of ICML, pp.282-289, 2001).

Figure illustrates a graphical model of the full FAM with its two components, the CRF and the GMMM. To train the CRF the output data is segmented into three states, either head-up, head-down or still. This can be down by using thresholds for the speed of movement. If the speed (the derivative of the pose over time) is larger than a threshold t, then the state is classified to be "head-up" movement, if the derivative lies between -t and t then the state is categorized as "head still", and if the derivative is smaller than -t, then the state is categorized as head-down. The derivatives can be obtained from the pose parameters which have been determined as described above.

As further input data to the CRF, the prosodic sound feature for pitch and/or intensity are used.

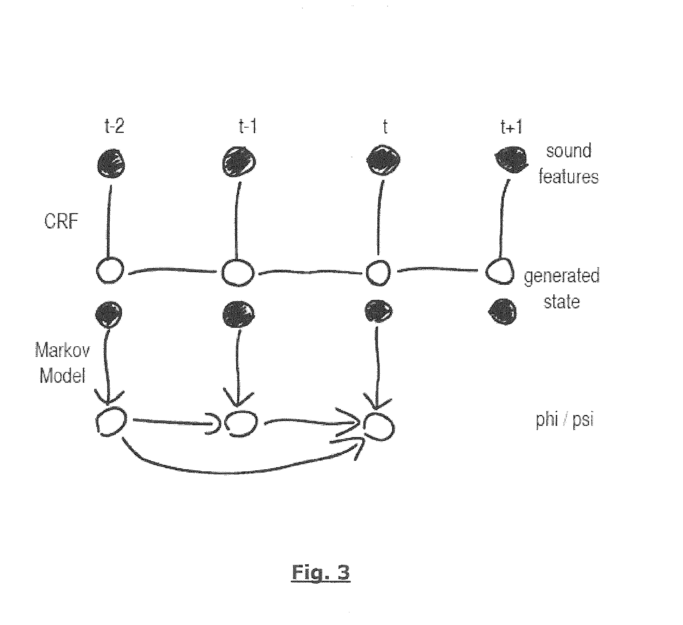

The state output from the CRF is then used as an input to a Markov Model as illustrated in Fig. 3.

To model the probability in the Markov Model, there is used a Gaussian Mixture Model where for each state, a joint probability distribution

$$p(\varphi_t, \ldots, \varphi_{t-T}, \dot{\psi}_t, \ldots, \dot{\psi}_{t-T}) \sim \mathcal{N}(\mu_s, \Sigma_s) \qquad (2.4)$$

for the pitch ($\varphi$) and yaw ($\psi$) angles (for the current time t and a history of length T = 5) is learned from the video data track.

For a new input sound file, first the CRF is used to determine the states. Then, to determine the pitch $\varphi t$ and yaw $\psi t$ at time t, there is sampled from the conditional distribution

$$p(\varphi_t, \dot{\psi}_t \mid \varphi_{t-1}, \ldots, \varphi_{t-T}, \dot{\psi}_{t-1}, \ldots, \dot{\psi}_{t-T}) \qquad (2.5)$$

By using a sampling approach, the system can generate different natural head movements for the same input. That is a big advantage, since when a sentence is repeated a second time, another plausible head movement can be generated.

It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a network entity such as a router, a server, a module acting in the network, or a mobile device such as a mobile phone, a smartphone, a PDA, or anything alike.

**Claims**

1. A computer-implemented method for performing a head animation to generate an animated head movement, said method comprising:

   Tracking the pose (or position) of the head through a sample video;
   Training a face animation model which represents said head using prosodic sound features as input and the tracked pose as an output;
   Based on said trained face animation model, using as an input the prosodic sound features and generating as an output a head animation to generate an animated head movement.

2. The method of claim 1, wherein
   said pose of the head comprises angles for yaw and pitch.

3. The method of claim 1 or 2, wherein
   Said face animation model is a double-layer model, wherein the first layer is a Conditional Random Filed (CRF) that uses the prosodic sound features as input and with the states of the head as output, and wherein the second layer is higher-order Gaussian Mixture Markov Model that generates the pose track angles (pitch and yaw) given the states and the history.

4. The method of claim 3, wherein
   the states of the head as output of the CRF comprise the states head-up, head-down, and head still.

5. The method of one of the preceding claims, wherein
   The pose tracking is performed by the tracking of landmarks based on which the pose is determined, and wherein A Bayesian approach is used for the pose tracking wherein the detected landmarks given the pose parameters can be represented by a measurement model using the assumption of Gaussian noise $N(0,\sigma_N)$ on the detected landmarks $L_f = (\ell_{f,1},...\ell_{f,L})$

6. The method of claim 5, wherein
   the probability of the landmarks is given by

$$p(\mathcal{L} \mid \rho) = \prod_f p(\mathcal{L}_f \mid \rho_f)$$

$$= \prod_f \exp(-\frac{1}{2\sigma_N} \sum_i \| \boldsymbol{P}_\rho \bar{x}_{i,f} - \bar{\ell}_{i,f} \|^2)$$

7. The method of one of the preceding claims, wherein
   For the Bayesian approach for the a-priori probability of the camera parameters there is used a motion model to assure that the head is not moving or changing its direction too rapidly.

8. The method of claim 7, wherein the a-priori probability is expressed by a probabilistic representation of the first and/or the second derivative of the pose, preferably by:

$$p(\rho) = \prod_i \exp\left(-\frac{1}{2}\eta_1 \|\nabla M_{\rho_f} x\|^2\right) + \exp\left(-\frac{1}{2}\eta_2 \|\nabla^2 M_{\rho_f} x\|^2\right)$$

9. The method of one of claims 5 to 8, wherein
to maximize the probability for the obtained pose parameters there is minimized the negative log of the probability yielding the cost function Cost Function expressed as

$$E(\rho) = -\log p(\mathcal{L} \mid \rho) \cdot p(\rho) = -\log p(\mathcal{L}|\rho) - \log p(\rho)$$

10. The method of one of the preceding claims, wherein
Said CRF is trained using as an input the states obtained from a sample video and the corresponding sound features;
Wherein the states for training said CRF are obtained from the tracked pose of the head which has been obtained by tracking features or landmarks for said sample video, and wherein
as further input data for training the CRF, the prosodic sound feature for pitch and/or intensity of the sample video are used.

11. The method of one of the preceding claims, wherein
the state output from the CRF is used as an input to a Markov Model.

12. The method of claim 11, wherein
To model the probability in the Markov Model, there is used a Gaussian Mixture Model where for each state, a joint probability distribution

$$p(\varphi_t, \ldots, \varphi_{t-T}, \psi_t, \ldots, \psi_{t-T}) \sim \mathcal{N}(\mu_s, \Sigma_s)$$

for the pitch ($\varphi$) and yaw ($\psi$) angels for the current time t and a history of length T is learned from the sample video data track, where $\mu_s$ is the mean and $\Sigma_s$ is the covariance matrix.

13. The method of one of the preceding claims, wherein
the CRF is used to determine the states, and then determine the pitch $\varphi$t and yaw $\psi$t at time t, there is sampled from the conditional distribution

$$p(\varphi_t, \psi_t \mid \varphi_{t-1}, \ldots, \varphi_{t-T}, \psi_{t-1}, \ldots, \psi_{t-T})$$

14. An apparatus for performing a head animation to generate an animated head movement, said apparatus comprising:

A module for tracking the pose (or position) of the head through a sample video;
A module for training a face animation model which represents said head using prosodic sound features as input and the tracked pose as an output;
A module for, based on said trained face animation model, using as an input the prosodic sound features and generating as an output a head animation a head animation to generate an animated head movement.

15. A computer program comprising computer program code which when being executed on a computer enables said computer to carry out a method according to one of claims 1 to 13.

Fig. 1

**Fig. 2**

**Fig. 3**

**EUROPEAN SEARCH REPORT**

Europäisches
Patentamt
European
Patent Office
Office européen
des brevets

Application Number

EP 12 15 1419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SARGIN M E ET AL: "Prosody-Driven Head-Gesture Animation", 2007 IEEE INTERNATIONAL CONFERENCE ON ACOUSTICS, SPEECH, AND SIGNAL PROCESSING 15-20 APRIL 2007 HONOLULU, HI, USA, IEEE, PISCATAWAY, NJ, USA, 15 April 2007 (2007-04-15), pages II-677, XP031463270, ISBN: 978-1-4244-0727-9 | 1,2,14, 15 | INV. G06T13/20 |
| Y | * abstract *  * sections 2-4 * | 5 | |
| X | SERGEY LEVINE ET AL: "Gesture controllers", ACM TRANSACTIONS ON GRAPHICS, vol. 29, no. 4, 26 July 2010 (2010-07-26), page 1, XP55031916, ISSN: 0730-0301, DOI: 10.1145/1778765.1778861 * abstract * * sections 5-7 * | 1,3,10, 11,14,15 | |
| | | | TECHNICAL FIELDS SEARCHED (IPC) |
| A | E Chuang ET AL: "Mood Swings: Expressive Speech Animation", , April 2005 (2005-04), pages 331-347, XP55032043, Retrieved from the Internet: URL:http://cims.nyu.edu/~bregler/moodswing _tog_final.pdf [retrieved on 2012-07-06] * section 5 * | 1-15 | G06T |
| | -/-- | | |

The present search report has been drawn up for all claims

| Place of search | Date of completion of the search | Examiner |
|---|---|---|
| Berlin | 4 January 2013 | Gao, Miao |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................

& : member of the same patent family, corresponding
document

EPO FORM 1503 03.82 (P04C01)

Europäisches
Patentamt
European
Patent Office
Office européen
des brevets

# EUROPEAN SEARCH REPORT

**Application Number**

EP 12 15 1419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WANG ET AL: "EM enhancement of 3D head pose estimated by point at infinity", IMAGE AND VISION COMPUTING, ELSEVIER, GUILDFORD, GB, vol. 25, no. 12, 1 September 2007 (2007-09-01), pages 1864-1874, XP022227807, ISSN: 0262-8856, DOI: 10.1016/J.IMAVIS.2005.12.017 * abstract * * section 3 * ----- | 5 | |
| A | MURPHY-CHUTORIAN E ET AL: "Head Pose Estimation in Computer Vision: A Survey", IEEE TRANSACTIONS ON PATTERN ANALYSIS AND MACHINE INTELLIGENCE, IEEE SERVICE CENTER, LOS ALAMITOS, CA, US, vol. 31, no. 4, 1 April 2009 (2009-04-01), pages 607-626, XP011266518, ISSN: 0162-8828, DOI: 10.1109/TPAMI.2008.106 * the whole document * ----- | 1-15 | TECHNICAL FIELDS SEARCHED (IPC) |

The present search report has been drawn up for all claims

| Place of search | Date of completion of the search | Examiner |
|---|---|---|
| Berlin | 4 January 2013 | Gao, Miao |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

Europäisches
Patentamt

European
Patent Office

Office européen
des brevets

Application Number

EP 12 15 1419

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 12 15 1419

The Search Division considers that the present European patent application does not comply with the
requirements of unity of invention and relates to several inventions or groups of inventions, namely:

```
1. claims: 1-4, 10-15

        Alternative face animation model
                    ---

2. claims: 5-9

        Training data set generation
                    ---
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61223607 B

**Non-patent literature cited in the description**

- **VOLKER BLANZ ; CURZIO BASSO ; TOMASO POGGIO ; THOMAS VETTER.** *Reanimating Faces in Images and Video,* 2003
- Brand: Voice pupperty. *SIGGRAPH 99,* 1999
- **EZZAT ; GEIGER ; POGGIO.** Trainable video realistic speech animation. *ACM Trans. Graph.,* 2002, 388-398
- **V. BLANZ ; T. VETTER.** A Morphable Model for the Synthesis of 3D Faces. *SIGGRAPH,* vol. 99, 187-194
- **R. KNOTHE.** A global-to-local model for the representation of human faces. *PhD Thesis,* 2009
- **P. PAYSAN ; R. KNOTHE ; B. AMBERG ; S. ROMDHANI ; T. VETTER.** A 3D Face Model for Pose and Illumination Invariant Face Recognition. *AVSS '09,* 2009
- **BRIAN AMBERG ; THOMAS VETTER.** Optimal Landmark Detection using Shape Models and Branch and Bound. *ICCV 2011,* 2011
- **THOMAS VETTER.** GraphTrack: Faster than real-time tracking in videos. *CVPR'11,* 2011
- **BRIAN AMBERG ; THOMAS VETTED.** Optimal Landmark Detection using Shape Models and Branch and Bound. *ICCV,* 2011
- **J. LAFFERTY ; A. MCCALLUM ; F. PEREIRA.** Conditional random fields: Probabilistic models for segmenting and labelling sequence data. *Proc. Of ICML,* 2001, 282-289